# DEMANDE DE BREVET EUROPEEN

(11) **EP 1 870 634 A1**
(43) Date de publication de la demande: **26.12.2007**
(21) Numéro de dépôt: 07290732.2
(22) Date de dépôt: 12.06.2007
(51) Int. Cl.: F21S 8/10, F21V 14/08, F21V 7/00

(54) **Projecteur à plusieurs fonctions d'éclairage, en particulier pour véhicule automobile**

(30) Priorité: 19.06.2006 FR 0605432
(71) Demandeur: VALEO VISION, 93012 Bobigny Cédex (FR)
(72) Inventeur: Meyrenaud, Jean-Luc, 93190 Livry Gargan (FR); Reiss, Benoît, 95600 Eaubonne (FR)

(57) **Abrégé**

L'invention concerne un projecteur pour l'émission d'un faisceau d'éclairage selon un axe principal (OX), en particulier pour véhicule automobile, comportant un réflecteur (20) présentant au moins deux régions (20A, 20B, 20C) susceptibles d'engendrer par elles-mêmes des faisceaux lumineux différents et coopérant avec au moins une source lumineuse (10) agencée à l'avant du réflecteur (20) et disposée selon un axe transversal (OY) par rapport à l'axe principal (OX), au moins un premier cache (30, 50) étant disposé entre la source lumineuse (10) et le réflecteur (20), le cache (30, 50) ne laissant passer des rayons lumineux prédéterminés émis par la source (10) qu'en direction d'une zone prédéterminée du réflecteur (10).

Selon l'invention, les faisceaux lumineux engendrés par les régions (20A, 20B, 20C) du réflecteur (20) sont des faisceaux à coupure, et au moins l'un de ces faisceaux lumineux remplit une fonction AFS.

## Description

### Domaine de l'invention

La présente invention concerne un projecteur à plusieurs fonctions, en particulier pour véhicule automobile, adapté à améliorer l'éclairement de la scène de route devant le véhicule.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules.

### État de la technique

Compte tenu du nombre croissant de véhicules circulant sur les routes, il est nécessaire de procurer, à ces véhicules et à leurs conducteurs, un éclairage le mieux adapté possible afin de réduire les risques d'accidents. En particulier la nuit, il est important que le conducteur puisse avoir une vision optimale de la route qui s'étend devant lui ainsi que des bas cotés de cette route. Autrement dit, pour des questions de sécurité, on cherche à améliorer l'éclairage de la route située devant le véhicule et, ainsi, à améliorer la vision de la scène de route par le conducteur du véhicule.

Actuellement, tous les véhicules roulant sur la route comportent un dispositif d'éclairage de la route, utilisé en particulier la nuit ou lors d'intempéries. Classiquement, il existe sur les véhicules automobiles deux types d'éclairages :
- un éclairage dit "de croisement " qui éclaire la route sur une courte distance, de l'ordre de 80 mètres, pour éviter d'éblouir les conducteurs des véhicules circulant en sens inverse ou ceux des véhicules qui précèdent, ou encore les personnes pouvant se situer sur la route ou sur les bas cotés de la route, et
- un éclairage dit "de route " qui éclaire la route intégralement sur une longue distance, d'environ 200 mètres.
   L'éclairage de croisement est réalisé au moyen de projecteurs de croisement, appelés aussi projecteurs codes, qui envoient chacun un faisceau de lumière descendante, dont la pente est typiquement de 1%, donnant une visibilité sur une distance de l'ordre de 60 à 80 mètres. Le faisceau est limité vers le haut, dans un plan perpendiculaire à l'axe longitudinal du véhicule, par une ligne appelée coupure, et définie par une norme. Cette coupure est une ligne d'éclairage maximum au-dessus de laquelle il est interdit d'éclairer en mode de croisement. Dans les pays à circulation à droite, elle est horizontale sur toute la largeur de la route et sur le bas coté gauche de la route et elle forme un angle de 15° au-dessus de l'horizontale sur le bas coté droit de la route.
   Ce faisceau de lumière descendante a pour but d'éviter d'éblouir les conducteurs des véhicules circulant en sens inverse et ceux des véhicules circulant dans le même sens, dans la scène de route s'étendant devant le véhicule.
   L'éclairage de route est réalisé au moyen de projecteurs de route qui envoient chacun un faisceau lumineux dirigé vers l'horizon. Il permet d'éclairer la route s'étendant devant le véhicule jusqu'à sensiblement l'horizon.
   Pour émettre sélectivement ces deux types de faisceaux d'éclairage, on connaît par exemple du document FR-B-2 808 867 un projecteur de véhicule automobile comprenant un miroir comportant deux zones et coopérant avec une source lumineuse unique et avec un occulteur déplaçable pour sélectivement engendrer deux faisceaux d'éclairage différents. Selon ce document, la source lumineuse est une source allongée s'étendant dans le miroir dans une direction généralement horizontale et généralement perpendiculaire à l'axe optique du miroir, et l'occulteur est apte à adopter sélectivement une première position dans laquelle il permet le passage du rayonnement émis par la source vers une première zone du miroir située dans un intervalle vertical donné dudit miroir, et une seconde position dans laquelle il permet le passage du rayonnement vers les deux zones du miroir, la deuxième zone étant dans le prolongement de la première. Dans la première position, le projecteur émet un faisceau conventionnel de croisement, et dans la deuxième position, il émet un faisceau conventionnel de route. Pour que ces faisceaux possèdent une photométrie satisfaisante (notamment en termes de largeur et d'épaisseur globales) en partant d'une source lumineuse disposée transversalement, il est nécessaire que le miroir soit relativement allongé en direction verticale. Il en résulte alors un projecteur de dimensions relativement importantes.
   D'autre part, en fonction des conditions de circulation, il est souhaitable d'offrir au conducteur du véhicule un éclairage adapté à ces conditions pour lui permettre d'avoir une meilleure vision de la scène de route devant lui.
   C'est ainsi que dans le domaine de l'éclairage automobile, on cherche à mettre au point de nouvelles prestations en vue d'améliorer la qualité de l'éclairage fourni par les projecteurs de véhicules, notamment dans certaines conditions particulières de circulation, par exemple lorsque le véhicule circule en ville, ou lorsqu'il circule par temps pluvieux, ou encore lorsqu'il circule sur autoroute, ou encore lorsqu'il aborde un virage pour éclairer l'intérieur de ce virage. Ces fonctions nouvelles d'éclairage sont généralement regroupées sous la dénomination de fonctions dites AFS, sigle utilisé pour l'expression anglo-saxonne « Adaptive Frontlighting System ».
   Pour des projecteurs de type elliptique, on peut facilement réaliser des fonctions AFS en modifiant la forme du cache situé entre la source lumineuse et la lentille convergente et engendrant la coupure du faisceau lumineux, ou encore en introduisant des prismes ou des miroirs entre le réflecteur elliptique et la lentille.
   Pour des projecteurs constitués principalement d'un réflecteur, notamment à surface complexe, d'une lampe et d'un dispositif d'occultation agencé à l'avant de la lampe, il est plus difficile de réaliser des fonctions AFS avec des moyens simples. Pour ce type de projecteurs, il a par exemple déjà été envisagé de déplacer des portions de réflecteur autour de la lampe, de manière à modifier la forme du faisceau d'éclairage.
   Cette solution n'est pas entièrement satisfaisante car elle nécessite des mécanismes complexes pour déplacer avec précision des composants de dimensions relativement importantes, qui sont ainsi susceptibles d'altérer la fiabilité du projecteur.
   On connaît par ailleurs des projecteurs dans lesquels un dispositif d'occultation comporte un volet mobile qui est commandé de manière à permettre, dans une première position, de réaliser un premier faisceau réglementaire, par exemple de feu de route, et, dans une deuxième position, de réaliser un deuxième faisceau réglementaire, par exemple de feu de croisement.
   Le document FR-A-2 239 862 décrit par exemple un tel type de volet mobile. Dans ce document, le volet est monté pivotant sur un bras autour d'un axe transversal. Lorsqu'il réalise la fonction de feu de route, il est totalement escamoté vers l'avant. Lorsqu'il réalise la fonction de feu de croisement, il occulte tous les rayons lumineux émis par la lampe sur un seul de ses côtés. Ce dispositif ne permet pas d'occulter sélectivement des rayons lumineux émis par la lampe vers le réflecteur dans des directions sensiblement opposées. De plus, ce dispositif ne permet pas de réaliser des fonctions AFS.
   Le document FR-A-2 664 363 décrit un autre type de projecteur à plusieurs fonctions, comportant une source lumineuse et un réflecteur divisé en deux zones réfléchissantes distinctes, susceptible d'émettre des faisceaux lumineux de types différents, en l'occurrence un faisceau de croisement de type européen doté d'une coupure supérieure, et un faisceau complémentaire à ce faisceau de croisement pour former un faisceau de route. Ce projecteur comporte en outre un écran d'occultation qui présente la forme d'un demi-cylindre de révolution, d'axe horizontal confondu avec l'axe optique du projecteur, cet écran étant articulé par un bord sur un axe parallèle à l'axe optique et situé au-dessous de la source lumineuse, par exemple monté à rotation sur le cache de lumière directe.
   L'écran d'occultation est opaque au rayonnement lumineux visible et au moins en partie transparent au rayonnement ultraviolet. Un tel projecteur permet, en commandant la position de l'écran d'occultation, d'offrir dans tous les cas l'émission d'un faisceau de rayonnement ultraviolet de type route, c'est-à-dire non limité par une coupure, permettant de rendre bien visibles des éléments de la circulation routière tels que des panneaux de signalisation et des obstacles mobiles ou non revêtus d'éléments fluorescents sous l'effet d'une illumination ultraviolette. Par contre, ce dispositif ne permet pas de réaliser des fonctions AFS.
   Le document FR-A-2 826 708 décrit également un projecteur comportant un réflecteur dit à surface complexe, c'est-à-dire du type dans lequel la surface réfléchissante est constituée d'une multitude de portions de paraboles orientées de manière que le projecteur produise un faisceau d'éclairage de croisement, en coopération avec un occulteur de lumière directe vers l'avant par une lampe disposée axialement. Cet occulteur est maintenu par des bras fixés au réflecteur, symétriques par rapport à l'axe optique du projecteur.
   Sur ces bras peuvent être articulés des volets mobiles selon un axe de rotation parallèle à l'axe optique, pour modifier le faisceau lumineux émis par le projecteur et ainsi réaliser différentes fonctions AFS. Selon une autre réalisation prévue par ce document, le projecteur comporte une pièce tubulaire coaxiale à la lampe et montée mobile en rotation à l'intérieur du dispositif d'occultation de lumière directe. Cette pièce tubulaire comporte deux bras d'occultation qui s'étendent axialement parallèlement aux bras de support de l'occulteur de lumière directe, et qui sont diamétralement opposés par rapport à l'axe principal. En position escamotée, les bras d'occultation se superposent radialement aux bras de support, le projecteur produisant alors un faisceau réglementaire de croisement.
   Sous l'effet d'un actionneur, les bras d'occultation sont décalés angulairement par rapport aux bras de support, de manière à occulter une partie des rayons émis par la lampe et à réaliser une fonction AFS, en l'occurrence une fonction d'éclairage par temps pluvieux. Dans cette position d'occultation, les bras d'occultation ont un bord axial sensiblement adjacent à un bord axial du bras de support associé, de manière à occulter une quantité importante de rayons lumineux sans que des rayons lumineux puissent passer entre un bras de support et le bras d'occultation associé. Un tel projecteur n'est donc capable de produire que deux faisceaux, à savoir un faisceau réglementaire de croisement, et un faisceau AFS, tel qu'un faisceau pour éclairage par temps pluvieux.
   Selon une autre conception de projecteurs, on connaît également du document US-A-2004/0170028 un projecteur d'éclairage utilisant une lampe à deux filaments, chaque filament étant associé à une coupelle d'occultation. Le réflecteur de ce projecteur présente deux régions de telle manière que chaque région de ce réflecteur ne reçoive que les rayons lumineux émis par un des deux filaments, et que les faisceaux lumineux formés par les rayons lumineux réfléchis par chacune de ces deux régions ne se recouvrent pas ou très peu. Il est ainsi possible, en allumant l'un ou l'autre des deux filaments, de former sélectivement deux faisceaux lumineux, avec ou sans coupure, l'un et/ou l'autre de ces deux faisceaux lumineux pouvant remplir une des fonctions AFS.
   La lampe décrite par ce document présente néanmoins divers inconvénients. Tout d'abord, une conception selon laquelle deux filaments sont alignés dans le prolongement l'un de l'autre implique un encombrement relativement important pour une telle lampe, qui implique à son tour l'utilisation de réflecteurs de dimensions relativement importantes. D'autre part, une telle disposition des filaments impose que la lampe soit disposée axialement, c'est-à-dire que les filaments doivent être alignés avec l'axe optique du réflecteur, et donc du projecteur. Il en résulte une souplesse moindre pour l'élaboration des réflecteurs en fonction du faisceau lumineux que l'on désire obtenir. Enfin, cette lampe à deux filaments et deux coupelles d'occultation est d'un coût élevé, ce qui restreint encore son utilisation.

### Exposé de l'invention

L'invention se place dans ce contexte et elle a pour but de remédier aux inconvénients des techniques exposées précédemment en proposant un projecteur capable de produire à l'aide d'une seule source lumineuse plusieurs faisceaux d'éclairage répondant à des fonctions AFS, de manière simple, fiable et peu onéreuse, un tel projecteur ayant un encombrement réduit.

A cette fin, l'invention propose un projecteur pour l'émission d'un faisceau d'éclairage selon un axe principal, en particulier pour véhicule automobile, comportant un réflecteur présentant au moins deux régions susceptibles d'engendrer par elles-mêmes des faisceaux lumineux différents et coopérant avec au moins une source lumineuse agencée à l'avant du réflecteur et disposée selon un axe transversal par rapport à l'axe principal, au moins un premier cache étant disposé entre la source lumineuse et le réflecteur, le cache ne laissant passer des rayons lumineux prédéterminés émis par la source qu'en direction d'une zone prédéterminée du réflecteur.

Selon l'invention, les faisceaux lumineux engendrés par les régions du réflecteur sont des faisceaux à coupure, et au moins l'un de ces faisceaux lumineux remplit une fonction AFS.

Selon d'autres caractéristiques,
- l'une des régions du réflecteur est dédiée à la formation d'un faisceau remplissant la fonction réglementaire d'éclairage de croisement ;
- l'une des régions (20A, 20B, 20C) du réflecteur (20) est dédiée à la formation d'un faisceau remplissant la fonction réglementaire d'éclairage antibrouillard ;
- l'une des régions du réflecteur est dédiée à la formation d'un faisceau remplissant la fonction AFS d'éclairage de virage ;
- l'une des régions du réflecteur est dédiée à la formation d'un faisceau remplissant la fonction AFS d'éclairage pour la conduite sur autoroute ;
- l'une des régions du réflecteur est dédiée au renforcement du faisceau AFS d'éclairage pour la conduite sur autoroute ;
- le premier cache comporte une ouverture sensiblement rectangulaire comportant deux bords sensiblement rectilignes sensiblement parallèles à l'axe transversal, et en ce que le projecteur comporte des premiers moyens d'actionnement pour faire adopter au premier cache des positions angulaires telles que les rayons lumineux émis par la source et délimités par les bords du cache ne puissent atteindre qu'une région prédéterminée du réflecteur ;
- le projecteur comporte un deuxième cache pouvant occuper au moins deux positions sous l'action de moyens d'actionnement pour intercepter ou laisser passer des rayons lumineux prédéterminés émis par la source en direction d'une zone prédéterminée du réflecteur ;
- le premier et le deuxième caches sont déplaçables autour de l'axe transversal indépendamment l'un de l'autre ;
- le premier et le deuxième caches sont cylindriques de révolution autour de l'axe transversal ;
- le premier et le deuxième caches comportent chacun une ouverture sensiblement rectangulaire comportant deux bords sensiblement rectilignes sensiblement parallèles à l'axe transversal ;
- le projecteur comporte des premiers et des deuxièmes moyens pour faire adopter indépendamment au premier et au deuxième cache respectivement des positions angulaires telles que les rayons lumineux émis par la source ne puissent atteindre que des zones prédéterminée du réflecteur ;
- une zone prédéterminée du réflecteur est constituée d'une partie d'une des régions du réflecteur ;
- une zone prédéterminée du réflecteur est constituée de plusieurs régions du réflecteur ;
- le projecteur comporte des seconds moyens d'actionnement pour relever le faisceau engendré par au moins l'une des régions du réflecteur et ainsi obtenir un faisceau qui possède toutes les caractéristiques réglementaires d'un faisceau de route ;
- la fonction AFS d'éclairage de virage est obtenue par allumage progressif de la source lumineuse en fonction d'un paramètre de virage, l'ouverture d'au moins le premier cache laissant passer les rayons lumineux émis par la source en direction de la région du réflecteur dédiée à la formation d'un faisceau remplissant la fonction AFS d'éclairage de virage ;
- la fonction AFS d'éclairage de virage est obtenue en faisant varier en fonction d'un paramètre de virage la largeur de l'ouverture résultant de la superposition des ouvertures des deux caches et laissant passer les rayons lumineux émis par la source en direction de la région du réflecteur dédiée à la formation d'un faisceau remplissant la fonction AFS d'éclairage de virage ;
- le paramètre de virage est une fonction de l'angle du volant ou de l'angle de braquage des roues directrices du véhicule ;
- au moins l'un des caches est constitué d'une coupelle d'occultation associée constructivement au filament d'une lampe ;
- la source lumineuse est constituée du filament d'une lampe à incandescence ou de l'arc électrique d'une lampe à décharge.

### Brève description des Figures

D'autres buts, caractéristiques et avantages de la présente invention ressortiront clairement de la description qui va maintenant être faite d'un exemple de réalisation donné à titre non limitatif en référence aux dessins annexés sur lesquels :
La Figure 1 représente schématiquement une conception de projecteur selon la présente invention ;
La Figure 2 représente schématiquement une partie des éléments de la Figure 1 dans une première position relative ;
La Figure 3 représente schématiquement une partie des éléments de la Figure 1 dans une première position relative ;
La Figure 4 représente schématiquement une vue en coupe par un plan vertical passant par l'axe principal du projecteur des éléments de la Figure 2 ;
La Figure 5 représente schématiquement une vue en coupe par un plan vertical passant par l'axe principal du projecteur des éléments de la Figure 3 ;
La Figure 6 représente schématiquement une vue en coupe par un plan vertical passant par l'axe principal d'un projecteur selon un deuxième mode de réalisation de l'invention, dans une première position relative ;
La Figure 7 représente schématiquement une vue analogue à celle de la Figure 6, pour une deuxième position ;
La Figure 8 représente schématiquement une vue analogue à celle des Figures 6 et 7, pour une troisième position, et
Les Figures 9A, 9B, 9C et 9D illustrent par des ensembles de courbes isocandela les répartitions lumineuses obtenues par le projecteur selon la présente invention, dans diverses configurations de ce projecteur.

### Description détaillée de modes de réalisation de l'invention

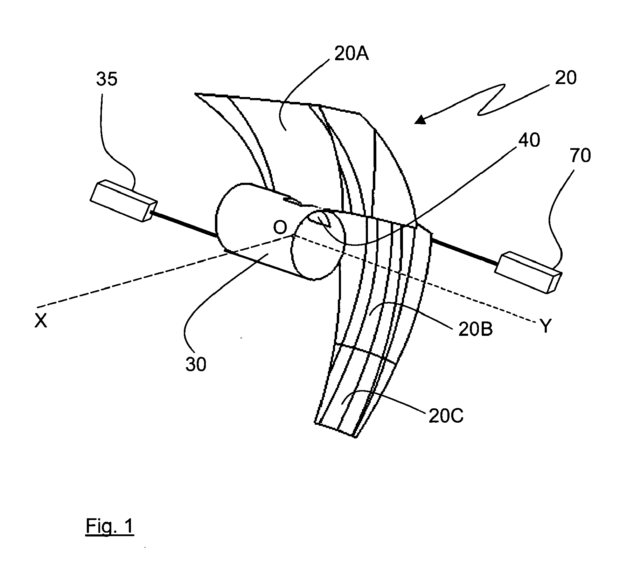

En référence tout d'abord aux Figures 1 à 3, on a représenté schématiquement en perspective isométrique les composants principaux d'un projecteur de véhicule automobile selon la présente invention, à savoir l'axe OX d'émission des faisceaux lumineux, le plus généralement parallèle à l'axe longitudinal du véhicule, l'axe OY, horizontal et perpendiculaire à l'axe OX, et sur lequel est disposée la source lumineuse 10 (non représentée sur les Figures 1 à 3), et le réflecteur 20. Les autres éléments du projecteur, tels que le boîtier, la glace de fermeture et différents équipements auxiliaires, n'ont pas été représentés pour la clarté des dessins, étant classiques en eux-mêmes. La source lumineuse 10 peut être constituée du filament d'une lampe à incandescence de type H1 ou H7, ou de l'arc électrique d'une lampe à décharge.

La source lumineuse 10 est disposée transversalement, son axe OY s'étendant horizontalement et perpendiculairement à l'axe optique principal OX du projecteur. Il est alors connu par exemple du document EP-A-0 933 585, que les génératrices du réflecteur 20, ou de seulement certaines de ses parties, peuvent être conçues de manière à amener toutes les images de la source 10 en dessous d'une limite supérieure, de manière à engendrer des faisceaux lumineux avec une coupure nette et de bonne qualité.

Un cache 30 est disposé au voisinage de la source lumineuse 10, de manière à ne permettre qu'à des rayons lumineux prédéterminés de frapper des régions prédéterminées du réflecteur 20, pour obtenir ainsi des faisceaux lumineux de caractéristiques prédéterminées.

Plus précisément, le cache 30 est de forme générale cylindrique, de révolution autour de l'axe OY de la source lumineuse 10 qu'il entoure presque complètement, à l'exception d'une ouverture 40, sensiblement rectangulaire, destinée à ne laisser passer vers le réflecteur 20que des rayons lumineux compris dans un angle solide prédéterminé, et à empêcher les autres rayons d'atteindre ce réflecteur. L'ouverture 40 comporte principalement deux bords 42 et 44, sensiblement rectilignes, et parallèles à l'axe OY du cylindre.

Des moyens d'actionnement, représentés schématiquement sous la référence 35, sont prévus pour faire adopter à ce cache 30 au moins deux positions angulaires différentes par rapport à l'axe OY, de manière à ce que l'ouverture 40 adopte elle-même deux positions angulaires différentes, c'est à dire qu'elle soit disposée entre la source 10 et des régions différentes du réflecteur 20.

On a par exemple représenté sur la Figure 1 le réflecteur 20 comme étant constitué de plusieurs régions 20A, 20B et 20C. La forme et les dimensions de l'ouverture 40, ou plus précisément la largeur et la longueur de cette ouverture sensiblement rectangulaire, seront déterminées en fonction des dimensions de la source 10 elle-même, considérée comme un cylindre de faible diamètre, typiquement de l'ordre de 1,2 millimètres environ de diamètre et de 4 millimètres de longueur environ, de la forme et des dimensions des régions 20A, 20B et 20C du réflecteur que l'on désire illuminer ou au contraire occulter, et du diamètre du cache cylindrique 30, c'est à dire de la distance entre cette ouverture 40 et l'axe OY.

On conçoit donc bien que, en fonction de la position angulaire du cache 30, il sera possible de choisir quelle région 20A, 20B ou 20C du réflecteur 20 sera illuminée par les rayons lumineux émis par la source 10, et ainsi, en fonction des caractéristiques optiques de ces régions 20A, 20B ou 20C, quelles seront les caractéristiques photométriques du faisceau lumineux réfléchi par la région illuminée du réflecteur 20.

Conformément à la présente invention, le réflecteur 20 sera conçu pour que tous les faisceaux engendrés par les régions 20A, 20B et 20C soient des faisceaux lumineux à coupure. On rappellera pour mémoire que, dans la technologie de l'éclairage automobile, la coupure d'un faisceau lumineux est définie comme une limite, sur un écran de projection placé à une distance réglementaire du projecteur émettant le faisceau lumineux, au dessus de laquelle l'intensité des rayons lumineux est inférieure à une valeur minimale prédéterminée, voire nulle.

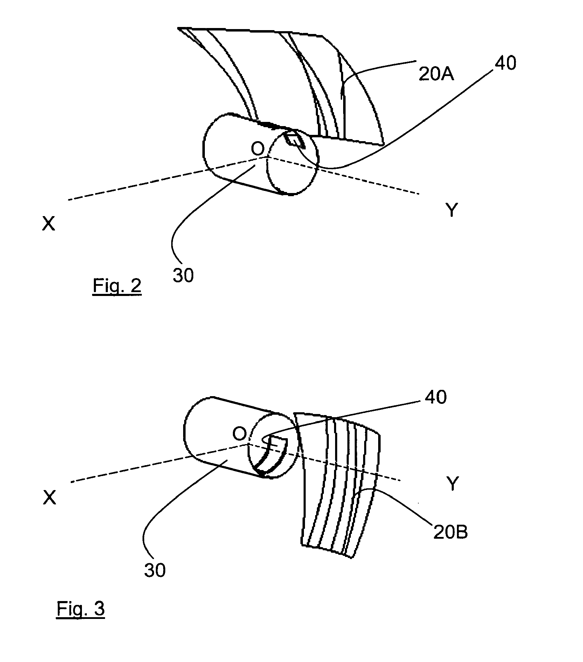

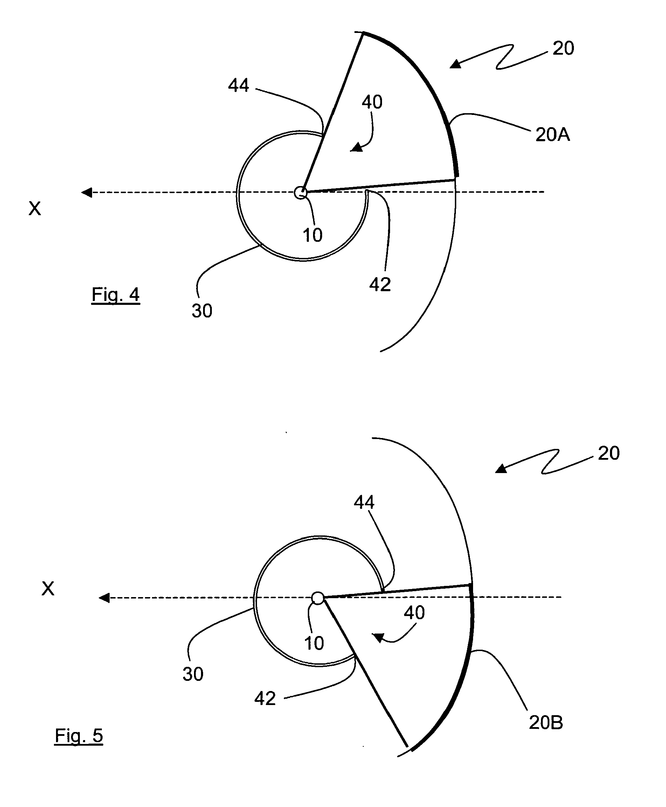

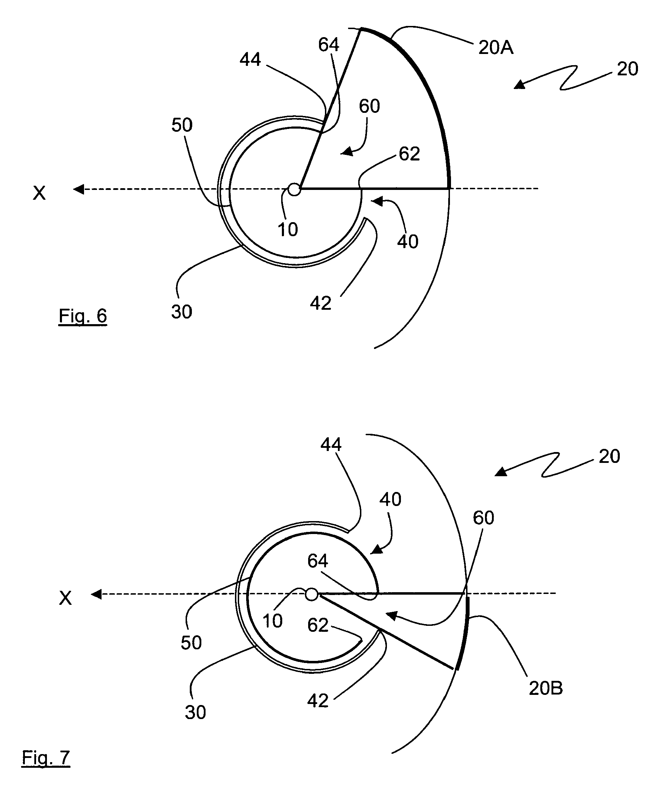

Par exemple, dans une première position angulaire du cache 30, et donc de l'ouverture 40, représentée plus particulièrement sur les Figures 2 et 4, les rayons lumineux issus de la source 10 ne peuvent atteindre que la région 20A du réflecteur 20. De même, dans une deuxième position angulaire du cache 30, et donc de l'ouverture 40, représentée plus particulièrement sur les Figures 3 et 5, les rayons lumineux issus de la source 10 ne peuvent atteindre que la région 20B du réflecteur 20.

Chaque région 20A et 20B pourra ainsi être calculée pour émettre chacune un faisceau lumineux différent. Par exemple, la région 20A pourra être conçue pour engendrer un faisceau avec une coupure particulière, tandis que la région 20B sera conçue pour engendrer un faisceau avec une autre coupure, chaque région étant chacune construite selon les enseignements du document EP-A-0 933 585 précité. Ces deux coupures pourront par exemple être d'un type appartenant au couple faisceau de croisement européen et faisceau antibrouillard, ou au couple faisceau de croisement pour conduite à droite et faisceau de croisement pour conduite à gauche.

On pourra ainsi facilement, en commandant uniquement la position du cache 30, passer d'un éclairage de croisement à un éclairage antibrouillard, ou encore d'une conduite à droite à une conduite à gauche.

Bien sûr, on pourra prévoir que le cache 30 adopte plus de deux positions angulaires, par exemple trois, associées chacune à une des trois régions du réflecteur 20 illustrées sur la Figure 1. Une telle conception se déduit aisément des explications qui précèdent, et ne sera donc pas développée plus en détail.

Il est ainsi possible d'obtenir par un simple mouvement du cache 30 au moins deux faisceaux choisis parmi un grand nombre de faisceaux possibles, qu'il s'agisse de faisceaux réglementaires ou de faisceaux remplissant des fonctions AFS, en choisissant pour les régions 20A, 20B et 20C du réflecteur 20 des surfaces calculées de manière appropriée. Le basculement du cache 30 d'une position à l'autre pourra être commandé par un interrupteur au tableau de bord ou au volant du véhicule, comme cela se pratique habituellement pour commander par exemple le passage d'un faisceau de croisement à un faisceau de route et inversement, ou être commandé automatiquement par un processeur recevant en entrée les informations de différents capteurs des variables de l'environnement du véhicule et/ou de son comportement.

En variante, le cache 30, au lieu d'être indépendant de la source 10 tel qu'on vient de le décrire, pourra être associé par construction à cette source. On pourra ainsi par exemple utiliser une lampe dont le filament est associé constructivement à une coupelle d'occultation, à l'instar par exemple les lampes de type H4 habituellement utilisées pour former un faisceau de croisement, et comportant une coupelle d'occultation au voisinage du filament, les bords ce cette coupelle d'occultation déterminant la coupure de ce faisceau de croisement. Il suffira alors de faire tourner la lampe autour de son axe, sur lequel se trouve le filament de la lampe, pour que cette coupelle d'occultation ne permette l'illumination que d'une région prédéterminée du réflecteur 20, à l'instar du cache 30.

On a représenté sur les Figures 6 à 8 un deuxième mode de réalisation de l'invention, basé sur le même principe, mais utilisant deux caches 30 et 50. Le cache 30 est tel qu'il a été décrit précédemment, et le cache 50 est de même conception cylindrique muni d'une ouverture 60 sensiblement rectangulaire, les deux caches étant coaxiaux, disposés autour de la même source 10 pour illuminer ou occulter les mêmes régions du réflecteur 20. L'ouverture 60 comporte de la même façon principalement deux bords 62 et 64, sensiblement rectilignes, et parallèles à l'axe OY du cylindre.

Des deuxièmes moyens d'actionnement (non représentés) sont également prévus pour faire adopter à ce deuxième cache 50 des positions angulaires différentes, de manière à ce que l'ouverture 60 adopte elle-même des positions angulaires différentes, c'est à dire qu'elle soit disposée entre la source 10 et des régions différentes du réflecteur 20, indépendamment de la position de la première ouverture 40 du premier cache 30.

Comme dans le premier mode de réalisation, la forme et les dimensions de l'ouverture 60 seront déterminées en fonction des dimensions de la source 10 elle-même, de la forme et des dimensions des régions 20A, 20B et 20C du réflecteur que l'on désire illuminer ou au contraire occulter, et de la distance entre cette ouverture 60 et l'axe OY, c'est à dire du diamètre du cache cylindrique 50.

Cette condition est toutefois tempérée par le fait que deux caches 30 et 50, ou plus exactement deux ouvertures 40 et 60, sont utilisées conjointement. En effet, pour que des rayons lumineux émis par la source 10 atteignent le réflecteur 20, il est nécessaire que les deux ouvertures coïncident sur une partie de leur largeur, pour se combiner en une ouverture résultante, constituée de la superposition des ouvertures 40 et 60, non nulle.

L'avantage d'utiliser deux caches résulte dans le fait qu'il est possible de donner à ces caches des positions relatives différentes, de sorte que l'ouverture résultante pourra avoir une largeur, comptée sur un arc de circonférence centrée sur OY, variable. II sera donc possible d'illuminer des zones du réflecteur 20 de manière plus souple qu'en utilisant une ouverture unique, une telle zone pouvant être constituée seulement d'une partie d'une des régions 20A, 20B ou 20C telles que définies plus haut, et pouvant également être constituée de plusieurs de ces régions, par exemple deux, en fonction des caractéristiques que l'on désire conférer au faisceau lumineux final.

C'est ce que l'on a représenté sur les Figures 6 à 8. On voit sur la Figure 6 les caches 30 et 50 dans une première position relative, dans laquelle seule l'ouverture 60 du cache 50 limite le faisceau émis par la source 10 vers le réflecteur 20, par ses bords 62 et 64. Dans cette position, c'est par exemple la région 20A du réflecteur 20 de la Figure 1 qui est illuminée.

Dans la position relative des deux caches représentée sur la Figure 7, seul le cache 50 a tourné par rapport à la Figure 6, le cache 30 étant resté immobile. Dans cette position, l'ouverture résultante par laquelle les rayons lumineux émis par la source 10 parviennent sur le réflecteur 20 est délimitée par le bord 64 du cache 50 et par le bord 42 du cache 30. Dans cette position, c'est par exemple la région 20B du réflecteur 20 de la Figure 1 qui est illuminée

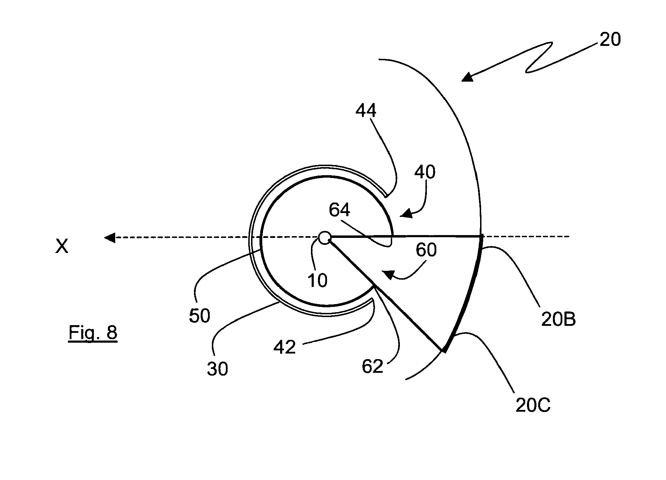

Dans la position relative des deux caches représentée sur la Figure 8, seul le cache 30 a tourné par rapport à le Figure 7, le cache 50 étant resté immobile. Dans cette position encore, seule l'ouverture 60 du cache 50 limite le faisceau émis par la source 10 vers le réflecteur 20, par ses bords 62 et 64, et ce sont par exemple les régions 20B et 20C du réflecteur 20 de la Figure 1 qui sont illuminées.

Selon ce deuxième mode de réalisation, les régions 20A, 20B et 20C du réflecteur 20 ne doivent donc plus nécessairement avoir la même étendue angulaire, et peuvent donc être « vues » de la source lumineuse 10 sous des angles très différents. Il en résulte que les régions 20A, 20B et 20C peuvent être conçues de façon beaucoup plus fine que dans le premier mode de réalisation, puisqu'il sera possible de n'utiliser qu'une fraction de chaque région pour participer à l'élaboration d'un faisceau d'éclairage. Il est ainsi possible d'élaborer des faisceaux lumineux remplissant n'importe laquelle des fonctions AFS.

Par exemple, dans le cas du réflecteur représenté sur la Figure 1, on pourrait concevoir :
- la région 20A de manière à ce qu'elle soit dédiée à la formation d'un faisceau remplissant la fonction AFS d'éclairage de virage (Bending Light en anglais),
- la régions 20B de manière à ce qu'elle soit dédiée à la formation d'un faisceau réglementaire de croisement, et
- la région 20C de manière à ce qu'elle soit dédiée à la formation d'un faisceau remplissant la fonction AFS d'éclairage pour la conduite sur autoroute (Motorway Light en anglais).

Dans une telle hypothèse, le projecteur de l'invention constituerait un projecteur de complément à un projecteur normalement utilisé pour la formation d'un faisceau de route.

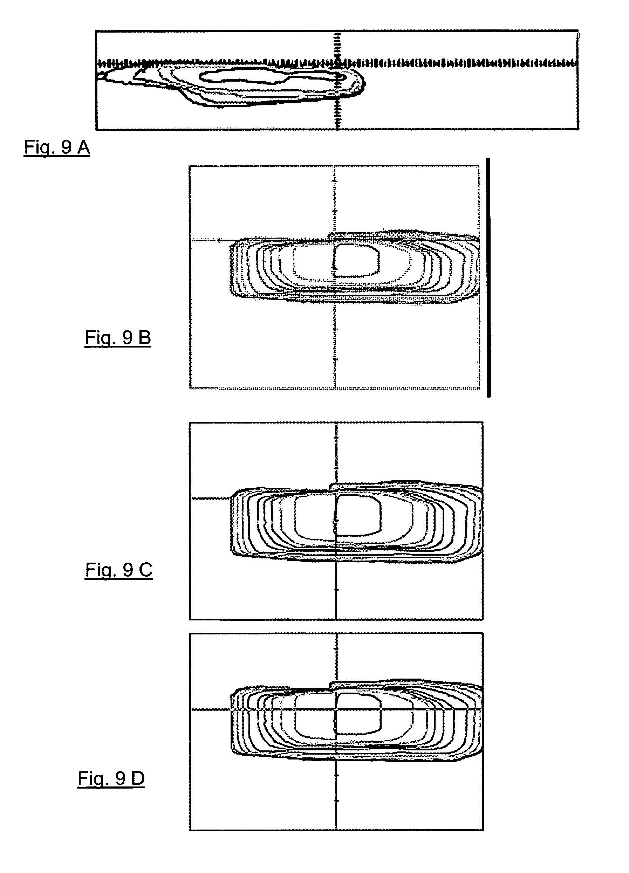

Quoi qu'il en soit, lorsque les deux caches 30 et 50 sont dans la position relative représentée sur la Figure 6, seule la région 20A du réflecteur 20 est illuminée, et engendre un faisceau d'éclairage de virage, destiné à éclairer l'intérieur d'une courbe abordée par le véhicule pour fournir au conducteur une meilleure visibilité de ce virage. Ce faisceau de virage, projeté sur un écran placé devant le véhicule, possède une répartition lumineuse représentée par l'ensemble de courbes isocandela de la Figure 9A, dans le cas d'un virage à gauche.

Pour procurer un effet dynamique à ce faisceau de virage, on pourra prévoir selon un premier mode de mise en oeuvre que, lorsque les deux caches 30 et 50 sont dans leur position représentée sur la Figure 6, que la source lumineuse 10 soit allumée progressivement en fonction d'un paramètre du virage concerné, par exemple l'angle du volant ou l'angle de braquage des roues directrices du véhicule, de telle sorte que le faisceau de virage soit totalement éteint lorsque le véhicule circule en ligne droite, et que le faisceau de virage présente son intensité maximale telle que représentée sur la Figure 9A lorsque l'angle de braquage du véhicule dépasse une valeur prédéterminée, par exemple 20°.

On pourra également prévoir, selon un deuxième mode de mise en oeuvre du faisceau de virage, que la source lumineuse 10 soit allumée à son intensité maximale en permanence, ou seulement à l'approche d'un virage. De nombreux moyens ont été décrits pour prévoir la présence d'un virage dans la trajectoire que va suivre le véhicule dans un avenir très proche, par exemple à l'aide de systèmes de navigation par GPS.

Simultanément, dans ce deuxième mode de mise en oeuvre, les caches 30 et 50 sont dans une position telle que les deux ouvertures 40 et 60 ne se chevauchent pas. Par exemple, le cache 50 peut avoir la position représentée sur la Figure 6, tandis que le cache 30 occupe une position angulaire telle que son bord 44 soit situé au voisinage immédiat du bord 62 du cache 50. Aucune lumière n'est donc émise vers la région 20A du réflecteur 20.

Pour procurer l'effet dynamique recherché, on pourra alors prévoir d'imprimer un mouvement de rotation au cache 30, dans le sens anti-horaire sur la Figure 6, le cache 50 restant fixe en rotation, de façon telle que la largeur de l'ouverture résultante s'accroisse progressivement en fonction d'un paramètre du virage, par exemple l'angle de braquage des roues directrices du véhicule, ou proportionnellement à cet angle de braquage, l'ouverture résultante atteignant sa largeur maximale, en l'occurrence égale à la largeur de l'ouverture 60, telle que représentée sur la Figure 6, pour un angle de braquage des roues directrices supérieur à une valeur prédéterminée, par exemple 20°. Selon ce deuxième mode de mise en oeuvre, l'intensité du faisceau de virage est croissante de zéro à son intensité maximale telle que représentée sur la Figure 9A, donnant ainsi un effet d'évolution dynamique en fonction de la courbure du virage abordé.

Partant de la configuration de la Figure 6 pour un faisceau de virage, on peut faire tourner le cache 50 dans le sens horaire pour aboutir à la configuration de la Figure 7, dans laquelle l'ouverture résultante est délimitée d'une part par le bord 64 du cache 50, et d'autre part par le bord 42 du cache 30. Dans cette configuration, les rayons émis par la source 10 ne peuvent illuminer que la région 20B du réflecteur 20.

On conçoit bien d'autre part que, dans cette configuration, la largeur de l'ouverture résultante telle que délimitée par ces deux bords peut avoir toute valeur désirée. La région 20B peut donc être « vue » de la source 10 sous un angle totalement différent de celui sous lequel est « vue » la région 20A.

La région 20B peut donc être conçue de façon à présenter une surface relativement importante, pour recueillir une partie importante des rayons lumineux émis par la source 10, et ainsi former un faisceau réglementaire exigeant une photométrie importante, comme par exemple un faisceau de croisement, dont on a représenté l'ensemble de courbes isocandela sur la Figure 9B.

Partant de la configuration de la Figure 7 pour un faisceau de croisement, on peut encore faire tourner le cache 30 dans le sens horaire pour aboutir à la configuration de la Figure 8, dans laquelle l'ouverture résultante est délimitée par les bords 62 et 64 du cache 50, et est donc constituée par la seule ouverture 60. On voit en observant les Figures 7 et 8 que l'ouverture résultante de la Figure 8 est sensiblement plus large que celle de la Figure 7, dans laquelle l'ouverture 60 du cache 50 était partiellement masquée par une portion du cache 30.

Les rayons lumineux émis par la source 10 peuvent donc atteindre une zone plus étendue du réflecteur 20 que dans la configuration de la Figure 7. En l'occurrence, dans la configuration de la Figure 8, ce sont les régions 20B et 20C du réflecteur 20 qui sont illuminées, alors que dans la configuration de la Figure 7, seule la région 20B était illuminée.

Il en résulte que le faisceau lumineux engendré par les régions 20B et 20C est constitué de la combinaison du faisceau de croisement, engendré par la région 20B et d'un faisceau supplémentaire, engendré par la région 20C. On pourra avantageusement prévoir que le faisceau engendré par la région 20C vienne compléter le faisceau de croisement engendré par la région 20B, pour former un faisceau remplissant la fonction AFS dite code autoroute (Motorway Light en anglais), dont on a représenté l'ensemble de courbes isocandela sur la Figure 9C.

On voit donc que grâce à l'utilisation des deux caches 30 et 50 de l'invention, il est possible de réaliser par exemple trois faisceaux d'éclairage, à savoir :
- un faisceau remplissant la fonction AFS d'éclairage de virage, par l'intermédiaire de la région 20A,
- un faisceau remplissant la fonction réglementaire de faisceau de croisement, par l'intermédiaire de la région 20B, et
- un faisceau remplissant la fonction AFS d'éclairage pour la conduite sur autoroute, par l'intermédiaire des régions 20B et 20C.

Selon une deuxième configuration préférée des régions 20A, 20B et 20C du réflecteur 20 représenté sur la Figure 1, on peut également concevoir :
- la région 20A de manière à ce qu'elle soit dédiée à la formation d'un faisceau remplissant la fonction AFS d'éclairage de virage (Bending Light en anglais), comme précédemment,
- la régions 20B de manière à ce qu'elle soit dédiée à la formation d'un faisceau remplissant la fonction AFS d'éclairage pour la conduite sur autoroute (Motorway Light en anglais), et
- la région 20C de manière à ce qu'elle soit dédiée à la même fonction que la région 20B, pour récolter une quantité supplémentaire de rayons lumineux émis par la source 10 et ainsi améliorer la photométrie du faisceau d'éclairage pour la conduite sur autoroute.

La mise en oeuvre du réflecteur 20 selon cette configuration de surfaces se déduit des explications données plus haut et ne sera donc pas explicitée dans tous ses détails.

Lorsque seule la région 20A est illuminée, comme dans la configuration de la Figure 6, le projecteur émet un faisceau d'éclairage de virage, comme on l'a décrit plus haut, avec éventuellement un effet dynamique. En faisant tourner le cache 50 dans le sens horaire pour aboutir à la configuration de la Figure 7, la région 20B du réflecteur 20 est seule illuminée, et engendre un faisceau de croisement pour la conduite sur autoroute. En faisant alors tourner le cache 30 dans le sens horaire pour aboutir à la configuration de la Figure 8, les régions 20B et 20C du réflecteur 20 sont toutes deux illuminées, et engendrent ensemble un faisceau de croisement renforcé pour la conduite sur autoroute, doté d'une photométrie accrue, pour encore améliorer la visibilité du conducteur.

Un avantage supplémentaire procuré par l'invention réside dans le fait que, en considérant le faisceau de la Figure 9C, il est possible d'obtenir un faisceau de route. Le faisceau de la Figure 9C est engendré par le projecteur tel qu'il se trouve dans la configuration représentée sur la Figure 8, c'est-à-dire lorsque les régions 20B et 20C du réflecteur 20 sont illuminées. Dans cette configuration, le faisceau engendré par le réflecteur 20 remplit alors soit un faisceau de croisement pour la conduite sur autoroute, soit un faisceau de croisement renforcé pour la conduite sur autoroute, doté d'une photométrie accrue, comme on l'a décrit plus haut.

Le projecteur de l'invention émettant ainsi l'un de ces faisceaux, il est possible de faire subir à ce projecteur une rotation à l'aide de moyens d'actionnement schématisés sous la référence 70, autour de l'axe OY ou d'un axe parallèle à cet axe OY, pour relever le faisceau de la Figure 9C, et ainsi obtenir le faisceau de la Figure 9D, qui possède toutes les caractéristiques réglementaires d'un faisceau de route. Cette rotation du projecteur s'effectue en bloc, tous les éléments du projecteur conservant leurs positions relatives.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que d'autres faisceaux réglementaires et/ou d'autres faisceaux AFS peuvent être obtenus en choisissant pour les caches 30 et 50 des ouvertures 40 et 60 de largeurs prédéterminées, et/ou des positions relatives prédéterminées, et en calculant les différentes régions du réflecteur en fonction des faisceaux lumineux, réglementaires ou remplissant des fonctions AFS, que l'on désire leur voir émettre. De même, la position relative des différentes régions du miroir 20 pourra être choisie en fonction des faisceaux lumineux qu'elles engendrent, de manière à optimiser les mouvements du cache 30 ou des caches 30 et 50. On pourra également utiliser comme source lumineuse, en coopération avec un réflecteur composé de plusieurs régions engendrant chacune un faisceau à coupure comme on l'a décrit, une lampe à deux filaments, chaque filament étant associé à une coupelle d'occultation. Chaque région du réflecteur ne reçoit alors que les rayons lumineux émis par un des deux filaments, pour former sélectivement ou en combinaison deux faisceaux lumineux, l'un et/ou l'autre de ces deux faisceaux lumineux pouvant remplir une des fonctions AFS.

## Revendications

1. - Projecteur pour l'émission d'un faisceau d'éclairage selon un axe principal (OX), en particulier pour véhicule automobile, comportant un réflecteur (20) présentant au moins deux régions (20A, 20B, 20C) susceptibles d'engendrer par elles-mêmes des faisceaux lumineux différents et coopérant avec au moins une source lumineuse (10) agencée à l'avant du réflecteur (20) et disposée selon un axe transversal (OY) par rapport à l'axe principal (OX), au moins un premier cache (30, 50) étant disposé entre la source lumineuse (10) et le réflecteur (20), le cache (30, 50) ne laissant passer des rayons lumineux prédéterminés émis par la source (10) qu'en direction d'une zone prédéterminée du réflecteur (10), **caractérisé en ce que** les faisceaux lumineux engendrés par les régions (20A, 20B, 20C) du réflecteur (20) sont des faisceaux à coupure, et **en ce qu'**au moins l'un de ces faisceaux lumineux remplit une fonction AFS.

2. - Projecteur selon la revendication 1, **caractérisé en ce que** l'une des régions (20A, 20B, 20C) du réflecteur (20) est dédiée à la formation d'un faisceau remplissant la fonction réglementaire d'éclairage de croisement.

3. - Projecteur selon la revendication 1, **caractérisé en ce que** l'une des régions (20A, 20B, 20C) du réflecteur (20) est dédiée à la formation d'un faisceau remplissant la fonction réglementaire d'éclairage antibrouillard.

4. - Projecteur selon la revendication 1, **caractérisé en ce que** l'une des régions (20A, 20B, 20C) du réflecteur (20) est dédiée à la formation d'un faisceau remplissant la fonction AFS d'éclairage de virage.

5. - Projecteur selon la revendication 1, **caractérisé en ce que** l'une des régions (20A, 20B, 20C) du réflecteur (20) est dédiée à la formation d'un faisceau remplissant la fonction AFS d'éclairage pour la conduite sur autoroute.

6. - Projecteur selon la revendication 1, **caractérisé en ce que** l'une des régions (20A, 20B, 20C) du réflecteur (20) est dédiée au renforcement du faisceau AFS d'éclairage pour la conduite sur autoroute. à la formation d'un faisceau réglementaire de croisement.

7. - Projecteur d'éclairage selon l'une quelconque des revendications 1 à 6, **caractérisé en ce que** le premier cache (30, 50) comporte une ouverture (40, 60) sensiblement rectangulaire comportant deux bords (42, 44 ; 62, 64) sensiblement rectilignes sensiblement parallèles à l'axe transversal (OY), et **en ce que** le projecteur comporte des premiers moyens d'actionnement (35) pour faire adopter au premier cache (30, 50) des positions angulaires telles que les rayons lumineux émis par la source (10) et délimités par les bords (42, 44 ; 62, 64) du cache (30, 50) ne puissent atteindre qu'une région (20A, 20B, 20C) prédéterminée du réflecteur (20).

8. - Projecteur d'éclairage selon l'une quelconque des revendications précédentes, **caractérisé en ce qu'**il comporte un deuxième cache (30, 50) déplaçable autour de l'axe transversal (OY). pouvant occuper au moins deux positions sous l'action de moyens d'actionnement pour intercepter ou laisser passer des rayons lumineux prédéterminés émis par la source (10) en direction d'une zone prédéterminée du réflecteur (10).

9. - Projecteur d'éclairage selon la revendication précédente, **caractérisé en ce que** le premier et le deuxième caches (30, 50) sont déplaçables autour de l'axe transversal (OY) indépendamment l'un de l'autre.

10. - Projecteur d'éclairage selon la revendication précédente, **caractérisé en ce que** le premier et le deuxième caches (30, 50) sont cylindriques de révolution autour de l'axe transversal (OY).

11. - Projecteur d'éclairage selon l'une quelconque des revendications 8 à 10, **caractérisé en ce que** le premier et le deuxième caches (30, 50) comportent chacun une ouverture (40, 60) sensiblement rectangulaire comportant deux bords (42, 44 ; 62, 64) sensiblement rectilignes sensiblement parallèles à l'axe transversal (OY).

12. - Projecteur d'éclairage selon la revendication 11, **caractérisé en ce qu'**il comporte des premiers (35) et des deuxièmes moyens pour faire adopter indépendamment au premier et au deuxième cache respectivement (30, 50) des positions angulaires telles que les rayons lumineux émis par la source (10) ne puissent atteindre que des zones prédéterminée du réflecteur (20).

13. - Projecteur d'éclairage selon la revendication 1 et la revendication 12, **caractérisé en ce qu'**une zone prédéterminée du réflecteur (20) est constituée d'une partie d'une des régions (20A, 20B ou 20C) du réflecteur (20).

14. - Projecteur d'éclairage selon la revendications 1 et la revendication 12, **caractérisé en ce qu'**une zone prédéterminée du réflecteur (20) est constituée de plusieurs régions (20A, 20B ou 20C) du réflecteur (20).

15. - Projecteur d'éclairage selon l'une quelconque des revendications précédentes, **caractérisé en ce qu'**il comporte des seconds moyens d'actionnement (70) pour relever le faisceau engendré par au moins l'une des régions (20A, 20B, 20C) du réflecteur (20) et ainsi obtenir un faisceau qui possède toutes les caractéristiques réglementaires d'un faisceau de route.

16. - Projecteur d'éclairage selon l'une quelconque des revendications précédentes, **caractérisé en ce que** la fonction AFS d'éclairage de virage est obtenue par allumage progressif de la source lumineuse (10) en fonction d'un paramètre de virage, l'ouverture (40) d'au moins le premier cache (30) laissant passer les rayons lumineux émis par la source (10) en direction de la région (20A, 20B, 20C) du réflecteur (10) dédiée à la formation d'un faisceau remplissant la fonction AFS d'éclairage de virage.

17. - Projecteur d'éclairage selon l'une quelconque des revendications 8 à 15, **caractérisé en ce que** la fonction AFS d'éclairage de virage est obtenue en faisant varier en fonction d'un paramètre de virage la largeur de l'ouverture résultant de la superposition des ouvertures (40, 60) des deux caches (30, 50) et laissant passer les rayons lumineux émis par la source (10) en direction de la région (20A, 20B, 20C) du réflecteur (10) dédiée à la formation d'un faisceau remplissant la fonction AFS d'éclairage de virage.

18. - Projecteur d'éclairage selon l'une quelconque des revendications 16 ou 17, **caractérisé en ce que** le paramètre de virage est une fonction de l'angle du volant ou de l'angle de braquage des roues directrices du véhicule.

19. - Projecteur d'éclairage selon l'une quelconque des revendications précédentes, **caractérisé en ce qu'**au moins l'un des caches (30, 50) est constitué d'une coupelle d'occultation associée constructivement au filament d'une lampe.

20. - Projecteur d'éclairage selon l'une quelconque des revendications 1 à 16, **caractérisé en ce que** la source lumineuse (10) est constituée du filament d'une lampe à incandescence ou de l'arc électrique d'une lampe à décharge.
